# EUROPEAN PATENT APPLICATION

(11) **EP 4 672 579 A1**
(43) Date of publication of application: **31.12.2025**
(21) Application number: 25183653.2
(22) Date of filing: 18.06.2025
(51) Int. Cl.: H02M 1/00, H02J 9/04, H02M 1/10, H02M 1/42, H02M 3/158, H02M 7/217

(54) **POWER CONVERTER AND UNINTERRUPTIBLE POWER SUPPLY INCLUDING THE SAME**

(30) Priority: 25.06.2024 CN 202410836346
(71) Applicant: Lian Zheng Electronic (Shenzhen) Co., Ltd., Guangdong 518101 (CN)
(72) Inventor: LIU, KAI, Shenzhen, Guangdong 518101 (CN); WU, YIPING, Shenzhen, Guangdong 518101 (CN); XU, ZHONGYONG, Shenzhen, Guangdong 518101 (CN)
(74) Representative: Schwan Schorer & Partner mbB

(57) **Abstract**

The present invention provides a power converter and an uninterruptible power supply including the same. The power converter includes: an input terminal, configured to be selectively connected to an alternating current power supply or a direct current power supply; an output terminal, configured to be connected to a positive direct current bus and a negative direct current bus; an inductor assembly, connected between the input terminal and a first terminal of a power conversion unit, where a second terminal of the power conversion unit is connected to the output terminal; the power conversion unit, configured to be capable of selectively implementing AC-DC conversion or DC-DC conversion; and a control unit, configured to control direct switching of the power conversion unit between a first status and a second status and/or between a third status and a fourth status, so as to achieve switching between a positive half cycle and a negative half cycle in the DC-DC conversion. The present invention does not generate other undesired operation statuses during the switching process between the positive half cycle and the negative half cycle, which can improve the reliability of circuit operation.

## Description

### CROSS REFERENCES TO RELATED APPLICATIONS

The present application claims the benefit of and priority to Chinese Invention Patent Application No. 202410836346.9, titled "POWER CONVERTER AND UNINTERRUPTIBLE POWER SUPPLY INCLUDING SAME" filed on June 25, 2024, which is incorporated herein by reference in entirety.

### TECHNICAL FIELD

The present invention belongs to the field of power electronics, and specifically relates to a power converter and an uninterruptible power supply including the same.

### BACKGROUND

The statements in this part are merely intended to provide background information related to the present invention, to help understand the present invention. This background information does not necessarily constitute the conventional technology.

An uninterruptible power supply is used to instantaneously switch to provide continuous power to a load from a direct current power supply in an abnormal state of mains supply, to protect the load from damage due to the interruption of the mains supply. Therefore, it is widely used in industrial, commercial, and consumer fields. Generally, in a power converter for the uninterruptible power supply, charging a positive direct current bus with the direct current power supply is referred to as a positive half cycle of DC-DC conversion, and charging a negative direct current bus with the direct current power supply is referred to as a negative half cycle of DC-DC conversion. However, when switching from the positive half cycle to the negative half cycle or from the negative half cycle to the positive half cycle, the power converter may experience an unexpected operation status where an inductor discharges energy to all buses through a series-connected bus capacitor. As a result, control uncertainty increases, and problems such as unstable control and poor electromagnetic compatibility (EMC) caused by excessive stress on switch tubes and drastic changes in inductor current ripples may occur.

### SUMMARY

To solve the above problems, the present invention provides a power converter, which can effectively solve the problem of abnormal circuit operation statuses during switching.

According to a first aspect of the present invention, a power converter is provided, including: an input terminal, configured to be selectively connected to an alternating current power supply or a direct current power supply; an output terminal, configured to be connected to a positive direct current bus and a negative direct current bus, where a positive direct current bus capacitor and a negative direct current bus capacitor connected in series with each other are electrically connected between the positive direct current bus and the negative direct current bus, and a node between the positive direct current bus capacitor and the negative direct current bus capacitor is connected to a neutral line; an inductor assembly, connected between the input terminal and a first terminal of a power conversion unit; the power conversion unit, a second terminal of which is connected to the output terminal, where the power conversion unit is configured to be capable of selectively implementing AC-DC conversion or DC-DC conversion, where the DC-DC conversion includes a first status, a second status, a third status, and a fourth status, where the first status is configured to store energy in the inductor assembly by the direct current power supply in a positive half cycle, the second status is configured to supply power to the negative direct current bus by the inductor assembly in a negative half cycle, the third status is configured to supply power to the positive direct current bus by the inductor assembly in the positive half cycle, and the fourth status is configured to store energy in the inductor assembly by the direct current power supply in the negative half cycle; and a control unit, configured to control direct switching of the power conversion unit between the first status and the second status and/or between the third status and the fourth status, so as to complete switching between the positive half cycle and the negative half cycle in the DC-DC conversion.

Preferably, the control unit is further configured to: when switching from the positive half cycle to the negative half cycle in the DC-DC conversion, if currently in the third status, control the power conversion unit to switch from the third status to the first status and then from the first status to the second status; and/or when switching from the negative half cycle to the positive half cycle in the DC-DC conversion, if currently in the fourth status, control the power conversion unit to switch from the fourth status to the second status and then from the second status to the first status.

Preferably, the power conversion unit includes a first transistor for controlling the connection of a mounted branch to the power converter, where the mounted branch is composed of the neutral line and the direct current power supply; and the control direct switching of the power conversion unit between the first status and the second status includes: control the ON or OFF of the first transistor to achieve the direct switching of the power conversion unit between the first status and the second status.

Preferably, a first terminal of the first transistor is connected to the neutral line, and a second terminal of the first transistor is connected to a negative electrode of the direct current power supply.

Preferably, the power conversion unit includes: a first node, connected to the inductor assembly; a first branch, including a second diode, where a positive electrode of the second diode is connected to the first node, and a negative electrode of the second diode is connected to the positive direct current bus; a second branch, including a second transistor and a third transistor connected in series with each other, where a first terminal of the second transistor is connected to a first terminal of the third transistor, a second terminal of the second transistor is connected to the first node, and a second terminal of the third transistor is connected to the neutral line; a third branch, including a fourth transistor, where a first terminal of the fourth transistor is connected to the first node, and a second terminal of the fourth transistor is connected to the negative direct current bus; and a fourth branch, including a first diode, where a positive electrode of the first diode is connected to the negative direct current bus, and a negative electrode of the first diode is connected to the negative electrode of the direct current power supply.

Preferably, the control unit is further configured to: control the ON or OFF of the third transistor, so as to achieve switching between the first status and the third status; and/or control the ON or OFF of the fourth transistor, so as to achieve switching between the second status and the fourth status.

Preferably, the power conversion unit includes: a second node and a third node; a first rectifier bridge arm connected between the second node and the third node, where the first rectifier bridge arm has a first intermediate node, and the first intermediate node is connected to the inductor assembly; a second rectifier bridge arm connected between the second node and the third node, where the second rectifier bridge arm has a second intermediate node, and the second intermediate node is connected to the neutral line; a fifth transistor connected between the second node and the third node; a first diode, where a positive electrode of the first diode is connected to the negative direct current bus, and a negative electrode of the first diode is connected to the negative electrode of the direct current power supply; a third diode, where a positive electrode of the third diode is connected to the second node, and a negative electrode of the third diode is connected to the positive direct current bus; and a sixth transistor connected between the third node and the negative direct current bus.

Preferably, the control unit is further configured to: control the ON or OFF of the fifth transistor, so as to achieve switching between the first status and the third status; and/or control the ON or OFF of the sixth transistor, so as to achieve switching between the second status and the fourth status.

Preferably, the power converter further includes a direct current switch, where a first terminal of the direct current switch is connected to the input terminal, a second terminal of the direct current switch is connected to the first terminal of the first transistor, and the second terminal of the first transistor is connected to a positive electrode of the direct current power supply.

Preferably, the power conversion unit includes: a first node, connected to the inductor assembly; a first branch, including a second diode, where a positive electrode of the second diode is connected to the first node, and a negative electrode of the second diode is connected to the positive direct current bus; a second branch, including a second transistor and a third transistor connected in series with each other, where a first terminal of the second transistor is connected to a first terminal of the third transistor, a second terminal of the second transistor is connected to the first node, and a second terminal of the third transistor is connected to the neutral line; a third branch, including an eighth diode, where a negative electrode of the eighth diode is connected to the first node, and a positive electrode of the eighth diode is connected to the negative direct current bus; and a fourth branch, including a first diode, where a positive electrode of the first diode is connected to the negative direct current bus, and a negative electrode of the first diode is connected to the second terminal of the direct current switch.

Preferably, the control unit is further configured to control the ON or OFF of the second transistor, so as to switch the power conversion unit between the fourth status and the third status.

According to a second aspect of the present invention, an uninterruptible power supply is provided, including the power converter as described in any one of the first aspect.

According to the embodiments of the present invention, by designing positive and negative half cycle switching always between the status where the direct current power supply stores energy in the inductor assembly in the positive half cycle and the status where the inductor assembly charges the negative direct current bus in the negative half cycle, or between the status where the inductor assembly supplies power to the positive direct current bus in the positive half cycle and the status where the direct current power supply stores energy in the inductor assembly in the negative half cycle, other undesired operation statuses will not be generated, and the reliability of circuit operation can be improved.

### BRIEF DESCRIPTION OF THE DRAWINGS

FIG. 1 illustrates a schematic circuit topology of a power factor correction (PFC) and DC-DC multiplexed power converter according to an embodiment of the present invention;
FIG. 2a and FIG. 2b illustrate equivalent circuit schematic diagrams corresponding to a status where a direct current power supply stores energy in an inductor (FIG. 2b) and a status where the inductor charges a positive direct current bus (FIG. 2b) in a positive half cycle of the circuit topology of the embodiment shown in FIG. 1, respectively;
FIG. 3a and FIG. 3b illustrate equivalent circuit schematic diagrams corresponding to a status where the direct current power supply stores energy in the inductor (FIG. 3a) and a status where the inductor charges a negative direct current bus (FIG. 3b) in a negative half cycle of the circuit topology of the embodiment shown in FIG. 1, respectively;
FIG. 4 illustrates an equivalent circuit schematic diagram of a first undesired operation status of the circuit topology of the embodiment shown in FIG. 1;
FIG. 5 illustrates an equivalent circuit schematic diagram of a second undesired operation status of the circuit topology of the embodiment shown in FIG. 1;
FIG. 6 illustrates a schematic circuit topology of another power factor correction (PFC) and DC-DC multiplexed power converter according to an embodiment of the present invention;
FIG. 7 illustrates a schematic circuit topology of another power converter according to an embodiment of the present invention;
FIG. 8 illustrates a simulation comparison waveform diagram of devices during positive and negative half cycle switching in the prior art; and
FIG. 9 illustrates a simulation comparison waveform diagram of devices in the power converter according to an embodiment of the present invention during positive and negative half cycle switching.

### DETAILED DESCRIPTION

Specific embodiments of the present invention will be described in detail below in conjunction with the accompanying drawing. It should be noted that these embodiments are only for illustrative purposes and are not intended to limit the present invention. In the following description, a large number of specific details are elaborated to provide a thorough understanding of the present invention. However, it is obvious to those skilled in the art that the present invention is not necessarily implemented by these specific details. In other examples, to avoid confusion with the present invention, well-known programs, materials, or methods are not specifically described. The terms "first" and "second" in the embodiments do not represent an order or sequence of appearance, but are only for distinguishing different branch or device names.

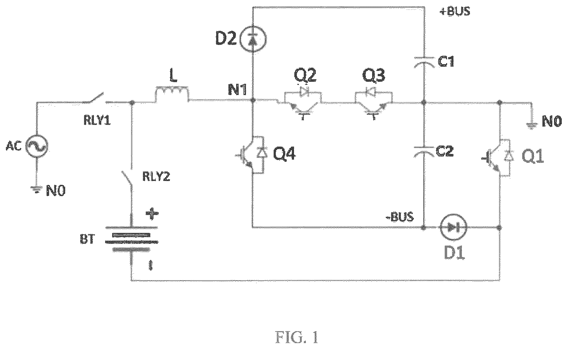

FIG. 1 illustrates a schematic circuit topology of a power factor correction and DC-DC multiplexed power converter according to an embodiment of the present invention, which can be applied to an uninterruptible power supply. The power converter includes an input terminal, an output terminal, an inductor assembly, and a power conversion unit. The input terminal is connected to an alternating current power supply AC by closing an alternating current switch RLY1 or to a direct current power supply BT by closing a direct current switch RLY2. The output terminal is connected to a positive direct current bus +BUS and a negative direct current bus -BUS, and a positive direct current bus capacitor C1 and a negative direct current bus capacitor C2 connected in series with each other are electrically connected between the positive direct current bus +BUS and the negative direct current bus -BUS. A node between the positive direct current bus capacitor C1 and the negative direct current bus capacitor C2 is connected to a neutral line N0. The inductor assembly L is connected between the input terminal and a first terminal of the power conversion unit. A second terminal of the power conversion unit is connected to the output terminal, and the power conversion unit is configured to selectively implement AC-DC conversion or DC-DC conversion. The power conversion unit includes a first transistor Q1, a first node N1, a first branch, a second branch, a third branch, and a fourth branch. The first transistor Q1 is configured to control the connection of a branch consisting of the neutral line N0 and the direct current power supply BT to the power converter. In some embodiments, a first terminal of the first transistor Q1 is connected to the neutral line N0, and a second terminal thereof is connected to a negative electrode of the direct current power supply BT. The first branch includes a second diode D2 for controlling the conduction between the first node N1 and the positive direct current bus +BUS. A positive electrode (or anode) of the second diode D2 is connected to the first node N1, and a negative electrode (or cathode) of the second diode D2 is connected to the positive direct current bus +BUS. The second branch includes a second transistor Q2 and a third transistor Q3 in reverse-series connection with the second transistor. In the embodiment of the present invention, as shown in FIG. 1, the two transistors Q2 and Q3 are provided with freewheeling diodes respectively. The reverse-series connection between two transistors refers to reverse connection between two transistors of the same type. For example, a drain of the second transistor Q2 is connected to a drain of the third transistor Q3. The purpose of the reverse-series connection is to prevent conduction through the two freewheeling diodes. According to other embodiments of the present invention, the two transistors Q2 and Q3 may alternatively be in forward-series connection in the absence of freewheeling diodes. The first transistor Q2 and the third transistor Q3 are configured to control the unidirectional conduction between the first node N1 and the neutral line N0. A first terminal of the second transistor Q2 is connected to a first terminal of the third transistor Q3, a second terminal of the second transistor Q2 is connected to the first node N1, and a second terminal of the third transistor Q3 is connected to the neutral line N0. The third branch includes a fourth transistor Q4 for controlling the conduction between the first node N1 and the negative direct current bus -BUS. A first terminal of the fourth transistor Q4 is connected to the first node N1, and a second terminal of the fourth transistor Q4 is connected to the negative direct current bus -BUS. The fourth branch includes a first diode D1 for controlling the conduction between the negative direct current bus -BUS and the direct current power supply BT, a positive electrode of the first diode D1 is connected to the negative direct current bus -BUS, and a negative electrode thereof is connected to the negative electrode of the direct current power supply BT.

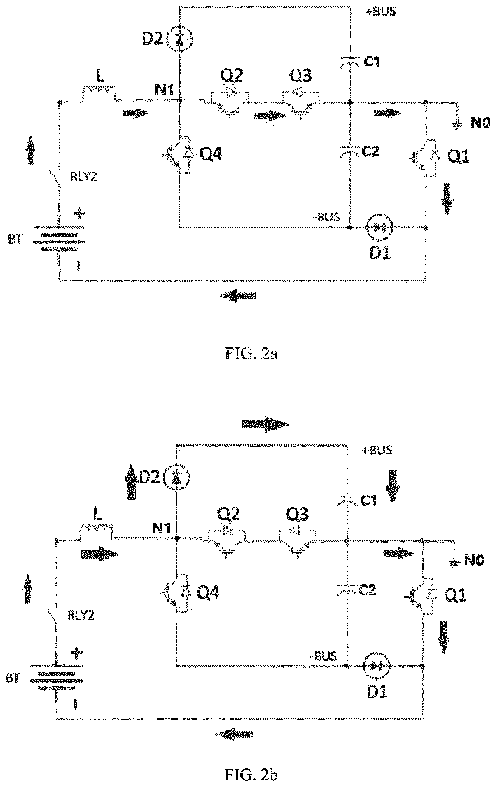

FIG. 2a and FIG. 2b illustrate equivalent circuit schematic diagrams corresponding to a status where the direct current power supply stores energy in the inductor assembly (FIG. 2a) and a status where the inductor assembly charges the positive direct current bus (FIG. 2b) in a positive half cycle of DC-DC conversion in the circuit topology of the embodiment shown in FIG. 1, respectively. In the positive half cycle of DC-DC conversion, the alternating current switch RLY1 is in an OFF state (not shown in FIG. 2a and FIG. 2b), and the direct current switch RLY2 is in an ON state. When in the positive half cycle, the first transistor Q1 and the second transistor Q2 remain on, the fourth transistor Q4 remains off, and the third transistor Q3 is controlled by pulse width modulation.

When the third transistor Q3 is turned on, as shown in FIG. 2a, the current path is a positive electrode of the direct current power supply BT → the inductor assembly L → the second transistor Q2 → the third transistor Q3 → the first transistor Q1 → the negative electrode of the direct current power supply BT, and the direct current power supply BT stores energy in the inductor assembly L. When the third transistor Q3 is turned off, as shown in FIG. 2b, the current path is the positive electrode of the direct current power supply BT → the inductor assembly L → the second diode D2 → the positive direct current bus capacitor C1 → the first transistor Q1 → the negative electrode of the direct current power supply BT, and the direct current power supply BT is connected in series with the inductor assembly L to boost and charge the positive direct current bus +BUS.

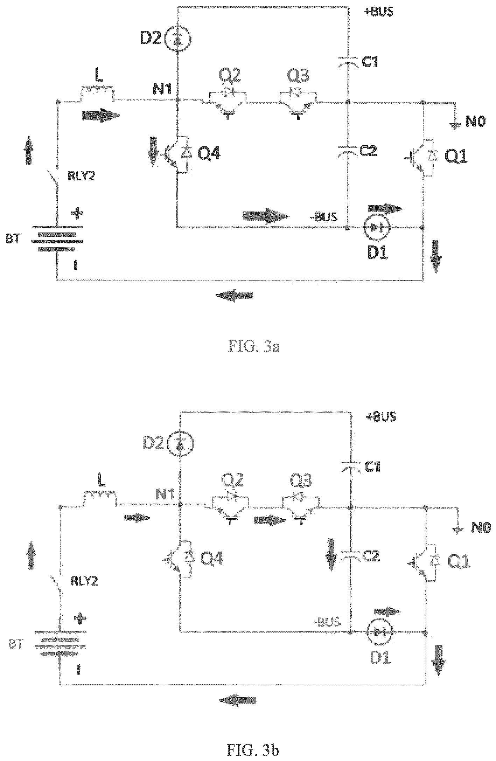

FIG. 3a and FIG. 3b illustrate equivalent circuit schematic diagrams corresponding to a status where the direct current power supply stores energy in the inductor assembly (FIG. 3a) and a status where the inductor assembly charges the negative direct current bus (FIG. 3b) in a negative half cycle of DC-DC conversion in the circuit topology of the embodiment shown in FIG. 1, respectively. In the negative half cycle of DC-DC conversion, the third transistor Q3 remains on, the second transistor Q2 and the first transistor Q1 remain off, and the fourth transistor Q4 is controlled by pulse width modulation.

When the fourth transistor Q4 is turned on, as shown in FIG. 3a, the current path is the positive electrode of the direct current power supply BT → the inductor assembly L → the transistor Q4 → the first diode D1 → the negative electrode of the direct current power supply BT, and the direct current power supply BT stores energy in the inductor assembly L. When the transistor Q4 is turned off, as shown in FIG. 3b, the current path is the positive electrode of the direct current power supply BT → the inductor assembly L → the transistor Q2 → the transistor Q3 → the negative direct current bus capacitor C2 → the first diode D1 → the negative electrode of the direct current power supply BT, and the direct current power supply BT is connected in series with the inductor assembly L to boost and charge the negative direct current bus -BUS.

The inventor found that, for the conversion circuit shown in FIG. 1, a plurality of switch devices are often operated for status switching between the positive half cycle and the negative half cycle of DC-DC conversion; and when in any status within the positive half cycle it is instructed to switch to the negative half cycle, if a plurality of switch devices cannot be simultaneously switched during operating the plurality of switch devices, a variety of other undesired statuses within a dead time may occur. The following will provide a specific introduction to the problems caused during status switching.

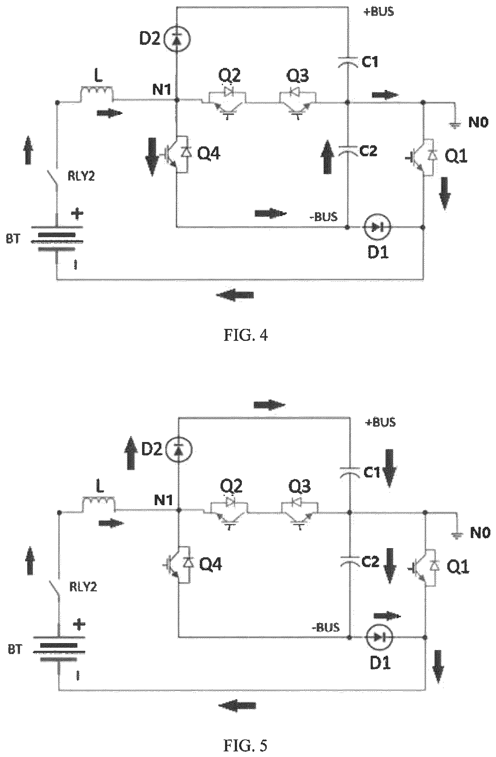

To switch from the status where the direct current power supply stores energy in the inductor in the positive half cycle shown in FIG. 2a to the status where the direct current power supply stores energy in the inductor in the negative half cycle shown in FIG. 3a, it is necessary to simultaneously control the third transistor Q3 to turn off, the fourth transistor Q4 to turn on, and the first transistor Q1 to turn off. In practical operation, the actual turn-on and/or turn-off of switch devices have a certain order. If the fourth transistor Q4 is first turned on while the third transistor Q3 and the first transistor Q1 are not turned off due to the uncertainty of device turn-on and/or turn-off delay, the current path as shown in FIG. 4 occurs: the positive electrode of the direct current power supply BT → the inductor assembly L → the fourth transistor Q4 → the negative direct current bus capacitor C2 → the first transistor Q1 → the negative electrode of the direct current power supply BT. At this time, the inductor assembly L instantaneously bears dual voltages from the direct current bus and the direct current power supply. The current rises quickly and induces magnetization at a fast speed, easily causing oscillation in a control circuit, exacerbating instantaneous surge current borne by the switch devices, adding new circuit operation statuses, and reducing the operation reliability of the circuit.

To switch from the status where the inductor charges the positive direct current bus in the positive half cycle shown in FIG. 2b to the status where the direct current power supply stores energy in the inductor in the negative half cycle shown in FIG. 3a, it is necessary to simultaneously turn on the fourth transistor Q4 and turn off the first transistor Q1. Similarly, if the fourth transistor Q4 is first turned on while the first transistor Q1 is not turned off, the current path as shown in FIG. 4 also occurs: the positive electrode of the direct current power supply BT → the inductor assembly L → the fourth transistor Q4 → the negative direct current bus capacitor C2 → the first transistor Q1 → the negative electrode of the direct current power supply BT. If the first transistor Q1 is first turned off while the fourth transistor Q4 is not turned on, the current path as shown in FIG. 5 occurs: the positive electrode of the direct current power supply BT → the inductor assembly L → the second diode D2 → the positive direct current bus capacitor C1 → the negative direct current bus capacitor C2 → the first diode D1 → the negative electrode of the direct current power supply BT. At this time, the inductor instantaneously bears a voltage that is twice the difference between the voltage of the direct current bus and the voltage of the direct current power supply, and its current drops significantly, easily causing oscillation in the control circuit, adding new circuit operation statuses, and reducing the operation reliability of the circuit.

To switch from the status where the inductor charges the positive direct current bus in the positive half cycle shown in FIG. 2b to the status where the inductor charges the negative direct current bus in the negative half cycle shown in FIG. 3b, it is necessary to simultaneously turn on the third transistor Q3 and turn off the first transistor Q1. Similarly, if the first transistor Q1 is first turned off while the third transistor Q3 is not turned on, the current path as shown in FIG. 5 also occurs.

The inventor found that the simultaneous operation of a plurality of devices during status switching may incur more abnormal circuit operation statuses and problems such as unstable control and poor EMC caused by excessive stress on switch devices and drastic changes in inductor current, thereby reducing the reliability of circuit operation. The decrease in the number of operated devices during status switching can effectively solve the problems.

According to one embodiment of the present invention, a power converter is provided, including an input terminal, an output terminal, an inductor assembly, a power conversion unit, and a control unit. The input terminal is connected to an alternating current power supply AC by closing an alternating current switch RLY1 or to a direct current power supply BT by closing a direct current switch RLY2. The output terminal is connected to a positive direct current bus +BUS and a negative direct current bus -BUS, and a positive direct current bus capacitor C1 and a negative direct current bus capacitor C2 connected in series with each other are electrically connected between the positive direct current bus +BUS and the negative direct current bus -BUS. A node between the positive direct current bus capacitor and the negative direct current bus capacitor is connected to a neutral line N0. The inductor assembly L is connected between the input terminal and the power conversion unit. The power converter of this embodiment is the same as that of the embodiment shown in FIG. 1. DC-DC conversion of the power converter includes a first status, a second status, a third status, and a fourth status. The first status is configured to store energy in the inductor assembly by the direct current power supply in a positive half cycle. The second status is configured to supply power to the negative direct current bus by the inductor assembly in a negative half cycle. The third status is configured to supply power to the positive direct current bus by the inductor assembly in the positive half cycle. The fourth status is configured to store energy in the inductor assembly by the direct current power supply in the negative half cycle. The control unit is configured to control the ON or OFF of the first transistor Q1 to implement direct switching between the first status and the second status, so as to complete switching between the positive half cycle and the negative half cycle in the DC-DC conversion.

In the embodiment of the present invention, only one switch device needs to be operated during switching to enable the DC-DC converter to enter the other half cycle without generating other undesired operation statuses, which can improve the reliability of circuit operation.

In some embodiments, the switching from the positive half cycle to the negative half cycle includes: when the circuit is in the first status of DC-DC conversion, turning off the first transistor Q1 to switch the circuit from the current first status to the second status, achieving the switching from the positive half cycle to the negative half cycle in DC-DC conversion.

In some embodiments, the switching from the positive half cycle to the negative half cycle includes: when the circuit is in the third status of DC-DC conversion, turning on the third transistor Q3 to switch the circuit from the current third status to the first status, and then turning off the first transistor Q1 to switch the circuit from the first status to the second status, achieving the switching from the positive half cycle to the negative half cycle in DC-DC conversion.

In some embodiments, after entering the second status, the fourth transistor Q4 can be controlled by pulse width modulation to switch the power converter between the second status and the fourth status.

In some embodiments, the switching from the negative half cycle to the positive half cycle includes: when the circuit is in the second status of DC-DC conversion, turning on the first transistor Q1 to switch the circuit from the current second status to the first status, achieving the switching from the negative half cycle to the positive half cycle in DC-DC conversion.

In some embodiments, the switching from the negative half cycle to the positive half cycle includes: when the circuit is in the fourth status of DC-DC conversion, turning off the fourth transistor Q4 to switch the circuit from the current fourth status to the second status, and then turning on the first transistor Q1 to switch the circuit from the second status to the first status, achieving the switching from the negative half cycle to the positive half cycle in DC-DC conversion.

In some embodiments, after entering the first status, the third transistor Q3 can be controlled by pulse width modulation to switch the power converter between the first status and the third status.

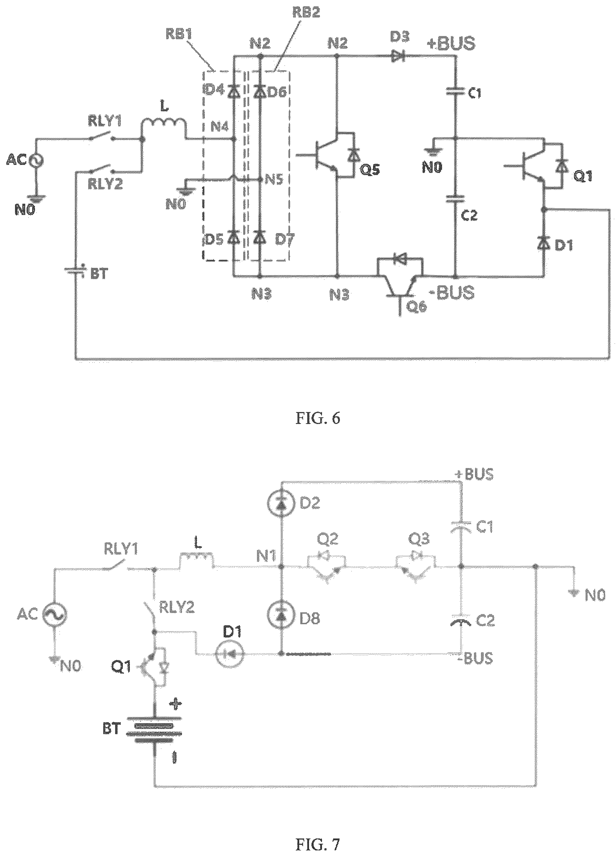

FIG. 6 illustrates a schematic circuit topology of a power converter according to another embodiment of the present invention, including an input terminal, an output terminal, an inductor assembly, a power conversion unit, and a control unit (not shown in FIG. 6). The input terminal, the output terminal, and the inductor assembly of the power converter in this embodiment are the same as those in the embodiment shown in FIG. 1, so they will not be repeated here. The power conversion unit in this embodiment includes a first transistor Q1, a second node N2, a third node N3, a first rectifier bridge arm RB1, a second rectifier bridge arm RB2, a fifth transistor Q5, a first diode D1, a third diode D3, and a sixth transistor Q6. The first transistor Q1 is configured to control the connection of a branch consisting of the neutral line N0 and the direct current power supply BT to the power converter. In some embodiments, a first terminal of the first transistor Q1 is connected to the neutral line N0, and a second terminal thereof is connected to a negative electrode of the direct current power supply BT. The first rectifier bridge arm RB1 is connected between the second node N2 and the third node N3. The first rectifier bridge arm RB1 has a first intermediate node N4, and the first intermediate node N4 is connected to the inductor assembly L. The second rectifier bridge arm RB2 is connected between the second node N2 and the third node N3. The second rectifier bridge arm RB2 has a second intermediate node N5, and the second intermediate node N5 is connected to the neutral line N0. The fifth transistor Q5 is connected between the second node N2 and the third node N3, and is configured to control the conduction between the second node N2 and the third node N3. A positive electrode of the first diode D1 is connected to the negative direct current bus -BUS, and a negative electrode of the first diode D1 is connected to a negative electrode of the direct current power supply BT. A positive electrode of the third diode D3 is connected to the second node N2, and a negative electrode thereof is connected to the positive direct current bus +BUS. A sixth transistor Q6 is connected between the third node N3 and the negative direct current bus -BUS, and is configured to control the conduction between the third node N3 and the negative direct current bus -BUS.

As shown in FIG. 6, in some embodiments, the first rectifier bridge arm RB1 includes a fourth diode D4 and a fifth diode D5. A negative electrode of the fourth diode D4 is connected to the second node N2, a positive electrode of the fourth diode D4 is connected to a negative electrode of the fifth diode D5, a positive electrode of the fifth diode D5 is connected to the third node N3, and a node between the fourth diode D4 and the fifth diode D5 is designated as the first intermediate node N4. The second rectifier bridge arm RB2 includes a sixth diode D6 and a seventh diode D7. A negative electrode of the sixth diode D6 is connected to the second node N2, a positive electrode of the sixth diode D6 is connected to a negative electrode of the seventh diode D7, a positive electrode of the seventh diode D7 is connected to the third node N3, and a node between the sixth diode D6 and the seventh diode D7 is designated as the second intermediate node N5.

Similar to the foregoing embodiments, the power conversion unit in this embodiment can implement DC-DC conversion. The DC-DC conversion includes a first status, a second status, a third status, and a fourth status. The control unit in this embodiment is also configured to control the ON or OFF of the first transistor Q1 to implement direct switching between the first status and the second status, so as to complete switching between the positive half cycle and the negative half cycle in the DC-DC conversion.

Specifically, when the conversion circuit shown in FIG. 6 needs to switch from the positive half cycle to the negative half cycle, the switching includes: when the circuit is in the first status (that is, the first transistor Q1 is turned on, the sixth transistor Q6 is turned off, and the fifth transistor Q5 is turned on), the current path of the first status is the positive electrode of the direct current power supply BT → the inductor assembly L → the fourth diode D4 → the fifth transistor Q5 → the seventh diode D7 → the neutral line N0 → the first transistor Q1 → the negative electrode of the direct current power supply BT, the control unit controls the first transistor Q1 to turn off to achieve the switching from the first status to the second status, at this time the sixth transistor Q6 is turned off, the fifth transistor Q5 is turned on, the first transistor Q1 is turned off, and the current path of the second status is the positive electrode of the direct current power supply BT → the inductor assembly L → the fourth diode D4 → the fifth transistor Q5 → the seventh diode D7 → the neutral line N0 → the negative direct current bus capacitor C2 → the first diode D1 → the negative electrode of the direct current power supply BT, completing the switching from the positive half cycle to the negative half cycle.

When the conversion circuit shown in FIG. 6 needs to switch from the positive half cycle to the negative half cycle, the switching includes: when the circuit is in the third status (that is, the first transistor Q1 is turned on, the sixth transistor Q6 is turned off, and the fifth transistor Q5 is turned off), the current path of the third status is the positive electrode of the direct current power supply BT → the inductor assembly L → the fourth diode D4 → the third diode D3 → the positive direct current bus capacitor C1 → the neutral line N0 → the first transistor Q1 → the negative electrode of the direct current power supply BT, and the direct current power supply BT is connected in series with the inductor assembly L to charge the positive direct current bus +BUS. The control unit controls the fifth transistor Q5 to turn on to switch the circuit from the current third status to the first status, and then controls the first transistor Q1 to turn off to achieve switching from the first status to the second status, completing the switching from the positive half cycle to the negative half cycle.

Further, after entering the second status, the control unit can control the sixth transistor Q6 to turn on or turn off (that is, the sixth transistor Q6 is controlled by pulse width modulation), achieving switching between the second status and the fourth status in the conversion circuit shown in FIG. 6. When the conversion circuit is in the second status, the control unit controls the sixth transistor to turn on, and the circuit switches from the second status to the fourth status. In the fourth status of the conversion circuit shown in FIG. 6, the fifth transistor Q5 is turned on, the first transistor Q1 is turned off, the sixth transistor Q6 is turned on, the current path of the fourth status is the positive electrode of the direct current power supply BT → the inductor assembly L → the fourth diode D4 → the fifth transistor Q5 → the sixth transistor Q6 → the first diode D1 → the negative electrode of the direct current power supply BT, and the direct current power supply BT stores energy in the inductor assembly L.

When the conversion circuit shown in FIG. 6 needs to switch from the negative half cycle to the positive half cycle, the switching includes: when the conversion circuit is in the second status (that is, the fifth transistor Q5 is turned on, the first transistor Q1 is turned off, and the sixth transistor Q6 is turned off), the first transistor Q1 is controlled to turn on, at this time the fifth transistor Q5 is turned on, the sixth transistor Q6 is turned off, and the first transistor Q1 is turned on, achieving switching from the second status to the first status and completing the switching from the negative half cycle to the positive half cycle.

When the conversion circuit shown in FIG. 6 needs to switch from the negative half cycle to the positive half cycle, the switching includes: when the conversion circuit is in the fourth status, the control unit controls the sixth transistor to turn off to switch the circuit from the current fourth status to the second status, and then controls the first transistor Q1 to turn on to achieve switching from the second status to the first status, completing the switching from the negative half cycle to the positive half cycle.

Further, after entering the first status, the control unit can control the fifth transistor Q5 to turn on or turn off (that is, the fifth transistor Q5 is controlled by pulse width modulation), achieving switching between the first status and the third status in the conversion circuit shown in FIG. 6. The control unit controls the fifth transistor Q5 to turn off, and the circuit switches from the first status to the third status.

FIG. 7 illustrates a schematic circuit topology of a power converter according to still another embodiment of the present invention, including an input terminal, an output terminal, an inductor assembly, a power conversion unit, and a control unit (not shown in FIG. 7). The input terminal, the output terminal, and the inductor assembly of the power converter in this embodiment are the same as those in the embodiment shown in FIG. 1, so they will not be repeated here. The power conversion unit in this embodiment includes: a first transistor Q1, a first node N1 connected to the inductor assembly L, a first branch, a second branch, a third branch, and a fourth branch. The first transistor Q1 is configured to control the connection of a branch consisting of the neutral line and the direct current power supply to the power converter. In some embodiments, a first terminal of the direct current switch RLY2 is connected to the input terminal, a second terminal of the direct current switch RLY2 is connected to a first terminal of the first transistor Q1, and a second terminal of the first transistor Q1 is connected to the positive electrode of the direct current power supply BT. The first branch and the second branch are the same as those in the embodiment shown in FIG. 1. In some embodiments, the third branch includes an eighth diode D8, a negative electrode of the eighth diode D8 is connected to the first node N1, and a positive electrode of the eighth diode D8 is connected to the negative direct current bus -BUS. The fourth branch includes a first diode D1, a positive electrode of the first diode D1 is connected to the negative direct current bus -BUS, and a negative electrode of the first diode D1 is connected to the second terminal of the direct current switch RLY2.

Similar to the foregoing embodiments, the power conversion unit in this embodiment can implement DC-DC conversion. The DC-DC conversion includes a first status, a second status, a third status, and a fourth status. The control unit in this embodiment is also configured to control the ON or OFF of the first transistor Q1 to implement direct switching between the first status and the second status, so as to complete switching between the positive half cycle and the negative half cycle in the DC-DC conversion. In addition, the control unit is also configured to control the ON or OFF of the second transistor Q2 to implement direct switching between the third status and the fourth status, so as to complete switching between the positive half cycle and the negative half cycle in the DC-DC conversion.

Specifically, when the power conversion circuit shown in FIG. 7 is in the positive half cycle, the first transistor Q1 and the third transistor Q3 are normally turned on, and the second transistor Q2 is modulated to turn on or off, so that the circuit can switch between the first status and the third status in the positive half cycle.

In some embodiments, when the circuit needs to switch from the positive half cycle to the negative half cycle:
When the circuit is in the first status (that is, the first transistor Q1, the second transistor Q2, and the third transistor Q3 are turned on), the current path of the first status is the positive electrode of the direct current power supply BT → the first transistor Q1 → the inductor assembly L → the second transistor Q2 → the third transistor Q3 → the neutral line N0 → the negative electrode of the direct current power supply BT. The control unit controls the first transistor Q1 to turn off to achieve switching from the first status to the second status. At this time, the first transistor Q1 is turned off, the second transistor Q2 is turned on, and the third transistor Q3 is turned on. The current path of the second status is the inductor assembly L → the second transistor Q2 → the third transistor Q3 → the neutral line N0 → the negative direct current bus capacitor C2 → the first diode D1 → the inductor assembly L, and the inductor assembly L charges the negative direct current bus --BUS, completing the switching from the positive half cycle to the negative half cycle. In some embodiments, the control unit can alternatively first control the second transistor Q2 to turn off to switch the circuit from the current first status to the third status, and then control the second transistor Q2 to turn on to achieve switching from the third status to the fourth status, completing the switching from the positive half cycle to the negative half cycle.

When the circuit is in the third status (that is, the first transistor Q1 and the third transistor Q3 are turned on and the second transistor Q2 is turned off), the current path of the third status is the positive electrode of the direct current power supply BT → the first transistor Q1 → the inductor assembly L → the second diode D2 → the positive direct current bus capacitor C1 → the neutral line N0 → the negative electrode of the direct current power supply BT, and the direct current power supply BT is connected in series with the inductor assembly L to charge the positive direct current bus +BUS. The control unit controls the second transistor Q2 to turn on, and the circuit switches from the current third status to the fourth status, completing the switching from the positive half cycle to the negative half cycle. In some embodiments, the control unit can alternatively first control the second transistor Q2 to turn on to switch the circuit from the current third status to the first status, and then control the first transistor Q1 to turn off to achieve switching from the first status to the second status, completing the switching from the positive half cycle to the negative half cycle.

Further, when the power conversion circuit shown in FIG. 7 is in the negative half cycle, the second transistor Q2 and the third transistor Q3 are normally turned on, and the third transistor Q3 is modulated to turn on or off, so that the circuit can switch between the second status and the fourth status in the negative half cycle. Specifically, when the power conversion circuit shown in FIG. 7 is in the negative half cycle, the second transistor Q2 and the third transistor Q3 are normally turned on. When the third transistor Q3 is turned on, the circuit is in the fourth status, and the direct current power supply BT stores energy in the inductor assembly L. The fourth status of the negative half cycle in this embodiment is the same as the ON or OFF state of the first transistor, the second transistor Q2, and the third transistor Q3 in the first status of the positive half cycle, so the current path is also the same. When the third transistor Q3 is turned off, the circuit switches to the second status, and the inductor assembly L charges the negative direct current bus capacitor C2.

In some embodiments, when the conversion circuit shown in FIG. 7 needs to switch from the negative half cycle to the positive half cycle:
When the circuit is in the second status: the control unit controls the first transistor Q1 to turn on, at this time the first transistor, the second transistor Q2, and the third transistor Q3 are all turned on, achieving switching from the second status to the first status, and completing the switching from the negative half cycle to the positive half cycle. In some embodiments, the control unit can alternatively control the first transistor Q1 to turn on to switch the circuit from the current second status to the fourth status, and then control the second transistor Q2 to turn off to switch the circuit from the current fourth status to the third status, completing the switching from the negative half cycle to the positive half cycle.

When the conversion circuit is in the fourth status: the control unit controls the second transistor Q2 to turn off, and the circuit switches from the current fourth status to the third status, completing the switching from the negative half cycle to the positive half cycle. In some embodiments, the control unit can alternatively control the first transistor Q1 to turn off to switch the circuit from the current fourth status to the second status, and then control the first transistor Q1 to turn on to switch the circuit from the current second status to the first status, completing the switching from the negative half cycle to the positive half cycle.

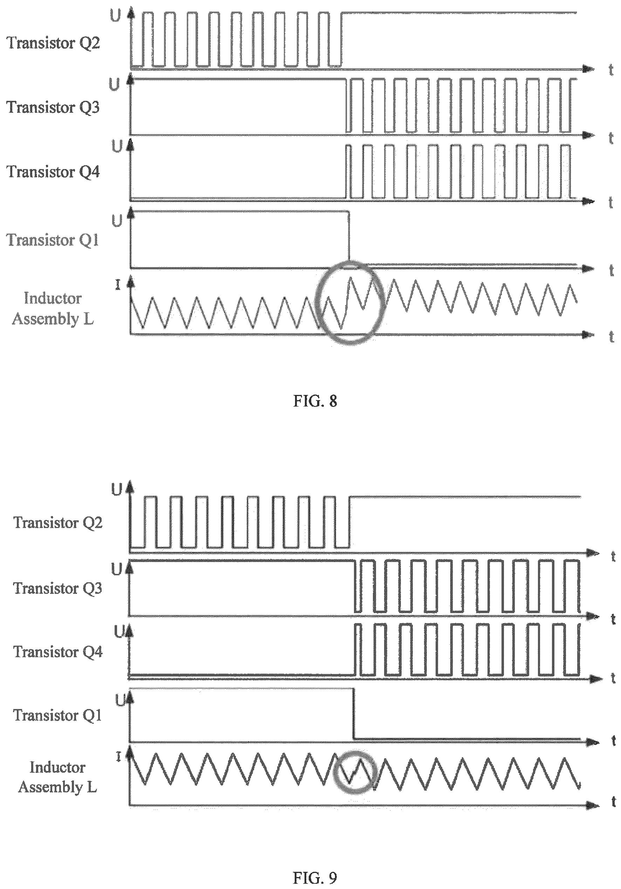

FIG. 8 illustrates a simulation waveform comparison diagram of devices switching in any status (the horizontal axis represents time t, and the vertical axis represents current I or voltage U). As shown in FIG. 8, when switching in any status, the undesired operation status as shown in FIG. 4 may occur. As shown by the ripple in the red circle, two terminals of the inductor assembly L bear the voltages of the bus and the direct current power supply in a short time, and the inductor current rises at a very fast speed. The high impact current may incur the problems such as over-standard voltage or current stress on switch devices and EMC deterioration, thereby reducing the reliability of the circuit operation.

FIG. 9 exemplarily illustrates simulation comparison waveforms of devices in the power converter during switching in positive and negative half cycles according to an embodiment of the present invention (the horizontal axis represents time t, and the vertical axis represents current I or voltage U). As shown by the red circle in FIG. 9, compared with FIG. 8, the current of the inductor assembly L in FIG. 9 is relatively smooth during the switching process. According to the embodiments of the present invention, by designing positive and negative half cycle switching always between the status where the direct current power supply stores energy in the inductor assembly in the positive half cycle and the status where the inductor assembly charges the negative direct current bus in the negative half cycle, only one switch device is operated to enable the circuit to enter the other half cycle without generating more statuses, thereby improving the reliability of circuit operation.

An embodiment of the present invention further provides an uninterruptible power supply (UPS), including the foregoing power converter. Compared to conventional UPSs, the operational reliability of the UPS in the embodiment of the present invention is higher.

Although the power converters shown in FIGs. 1, 6, and 7 are used as examples in various embodiments of the present invention, those skilled in the art can apply these embodiments to circuits (such as Buck circuits) that include high-frequency (20 KHz) switching in low-frequency (50-60 Hz) switching and control the switching between low-frequency statuses without departing from the scope of protection of the present invention.

Although the transistor is shown as an insulated gate bipolar transistor (IGBT) with a diode in anti-parallel connection between a collector and an emitter in various embodiments of the present invention, the transistor can be replaced with a metal oxide semiconductor field-effect transistor (MOSFET) with a diode in anti-parallel connection, a thyristor, another suitable transistor in anti-parallel connection with a diode, or another controllable electronic switch as needed.

The control unit in the embodiments of the present invention is configured to control the ON and OFF of controllable switch elements (such as transistors). For example, the control unit is configured to include a processing circuit for driving control on the ON/OFF of each transistor. The processing circuit may include digital electronic circuits such as an operation processing apparatus and a storage apparatus, may include analog electronic circuits such as a comparator, an operational amplifier, and a differential amplifier, or may include both digital electronic circuits and analog electronic circuits.

According to other embodiments of the present invention, the alternating current switch and the direct current switch can be replaced with switch elements known in the art.

The above embodiments are only used for illustrating the technical solutions of the present invention, rather than limiting them. Although the present invention is described in detail with reference to the foregoing embodiments, those of ordinary skill in the art should understand that they still can make modifications to the technical solutions described in the foregoing embodiments or make equivalent replacements to some technical features therein; and these modifications or replacements do not make the essences of the corresponding technical solutions depart from the spirit and scope of the technical solutions of the embodiments of the present invention.

## Claims

1. A power converter, comprising:
an input terminal, configured to be selectively connected to an alternating current power supply or a direct current power supply;
an output terminal, configured to be connected to a positive direct current bus and a negative direct current bus, wherein a positive direct current bus capacitor and a negative direct current bus capacitor connected in series with each other are electrically connected between the positive direct current bus and the negative direct current bus, and a node between the positive direct current bus capacitor and the negative direct current bus capacitor is connected to a neutral line;
an inductor assembly, connected between the input terminal and a first terminal of a power conversion unit;
the power conversion unit, a second terminal of which is connected to the output terminal, wherein the power conversion unit is configured to be capable of selectively implementing AC-DC conversion or DC-DC conversion, wherein the DC-DC conversion comprises a first status, a second status, a third status, and a fourth status, wherein the first status is configured to store energy in the inductor assembly by the direct current power supply in a positive half cycle, the second status is configured to supply power to the negative direct current bus by the inductor assembly in a negative half cycle, the third status is configured to supply power to the positive direct current bus by the inductor assembly in the positive half cycle, and the fourth status is configured to store energy in the inductor assembly by the direct current power supply in the negative half cycle; and
a control unit, configured to control direct switching of the power conversion unit between the first status and the second status and/or between the third status and the fourth status, so as to complete switching between the positive half cycle and the negative half cycle in the DC-DC conversion.

2. The power converter according to claim 1, wherein the control unit is further configured to:
when switching from the positive half cycle to the negative half cycle in the DC-DC conversion, if currently in the third status, control the power conversion unit to switch from the third status to the first status and then from the first status to the second status; and/or
when switching from the negative half cycle to the positive half cycle in the DC-DC conversion, if currently in the fourth status, control the power conversion unit to switch from the fourth status to the second status and then from the second status to the first status.

3. The power converter according to claim 1 or 2, wherein the power conversion unit comprises a first transistor for controlling the connection of a mounted branch to the power converter, wherein the mounted branch is composed of the neutral line and the direct current power supply; and
the control direct switching of the power conversion unit between the first status and the second status comprises: control the ON or OFF of the first transistor to achieve the direct switching of the power conversion unit between the first status and the second status.

4. The power converter according to claim 3, wherein a first terminal of the first transistor is connected to the neutral line, and a second terminal of the first transistor is connected to a negative electrode of the direct current power supply.

5. The power converter according to claim 4, wherein the power conversion unit comprises:
a first node, connected to the inductor assembly;
a first branch, comprising a second diode, wherein a positive electrode of the second diode is connected to the first node, and a negative electrode of the second diode is connected to the positive direct current bus;
a second branch, comprising a second transistor and a third transistor connected in series with each other, wherein a first terminal of the second transistor is connected to a first terminal of the third transistor, a second terminal of the second transistor is connected to the first node, and a second terminal of the third transistor is connected to the neutral line;
a third branch, comprising a fourth transistor, wherein a first terminal of the fourth transistor is connected to the first node, and a second terminal of the fourth transistor is connected to the negative direct current bus; and
a fourth branch, comprising a first diode, wherein a positive electrode of the first diode is connected to the negative direct current bus, and a negative electrode of the first diode is connected to the negative electrode of the direct current power supply.

6. The power converter according to claim 5, wherein the control unit is further configured to:
control the ON or OFF of the third transistor, so as to achieve switching between the first status and the third status; and/or
control the ON or OFF of the fourth transistor, so as to achieve switching between the second status and the fourth status.

7. The power converter according to claim 4, wherein the power conversion unit comprises:
a second node and a third node;
a first rectifier bridge arm connected between the second node and the third node, wherein the first rectifier bridge arm has a first intermediate node, and the first intermediate node is connected to the inductor assembly;
a second rectifier bridge arm connected between the second node and the third node, wherein the second rectifier bridge arm has a second intermediate node, and the second intermediate node is connected to the neutral line;
a fifth transistor connected between the second node and the third node;
a first diode, wherein a positive electrode of the first diode is connected to the negative direct current bus, and a negative electrode of the first diode is connected to the negative electrode of the direct current power supply;
a third diode, wherein a positive electrode of the third diode is connected to the second node, and a negative electrode of the third diode is connected to the positive direct current bus; and
a sixth transistor connected between the third node and the negative direct current bus.

8. The power converter according to claim 7, wherein the control unit is further configured to:
control the ON or OFF of the fifth transistor, so as to achieve switching between the first status and the third status; and/or
control the ON or OFF of the sixth transistor, so as to achieve switching between the second status and the fourth status.

9. The power converter according to claim 3, further comprising a direct current switch, wherein a first terminal of the direct current switch is connected to the input terminal, a second terminal of the direct current switch is connected to the first terminal of the first transistor, and the second terminal of the first transistor is connected to a positive electrode of the direct current power supply.

10. The power converter according to claim 9, wherein the power conversion unit comprises:
a first node, connected to the inductor assembly;
a first branch, comprising a second diode, wherein a positive electrode of the second diode is connected to the first node, and a negative electrode of the second diode is connected to the positive direct current bus;
a second branch, comprising a second transistor and a third transistor connected in series with each other, wherein a first terminal of the second transistor is connected to a first terminal of the third transistor, a second terminal of the second transistor is connected to the first node, and a second terminal of the third transistor is connected to the neutral line;
a third branch, comprising an eighth diode, wherein a negative electrode of the eighth diode is connected to the first node, and a positive electrode of the eighth diode is connected to the negative direct current bus; and
a fourth branch, comprising a first diode, wherein a positive electrode of the first diode is connected to the negative direct current bus, and a negative electrode of the first diode is connected to the second terminal of the direct current switch.

11. The power converter according to claim 10, wherein
the control unit is further configured to control the ON or OFF of the second transistor, so as to switch the power conversion unit between the fourth status and the third status.

12. An uninterruptible power supply, comprising the power converter according to any one of claims 1 to 11.
